# EUROPEAN PATENT APPLICATION

(11) **EP 4 614 936 A1**
(43) Date of publication of application: **10.09.2025**
(21) Application number: 23896513.1
(22) Date of filing: 14.11.2023
(51) Int. Cl.: H04L 47/125, H04L 49/90, H04L 49/9057

(54) **DATA TRANSMISSION METHOD AND NODE**

(30) Priority: 01.12.2022 CN 202211530354
(71) Applicant: Huawei Technologies Co., Ltd., Shenzhen, Guangdong 518129 (CN)
(72) Inventor: LAM, Wan, Shenzhen, Guangdong 518129 (CN); YE, Qiuhong, Shenzhen, Guangdong 518129 (CN); HE, Zijian, Shenzhen, Guangdong 518129 (CN)
(74) Representative: MERH-IP Matias Erny Reichl Hoffmann Patentanwälte PartG mbB
(86) International application number: PCT/CN2023/131465
(87) International publication number: WO 2024/114361

(57) **Abstract**

Embodiments of this application provide a data transmission method and node, and relate to the field of communication technologies, to reduce re-ordering overheads of data packets in a dynamic load balancing mechanism, and improve data transmission efficiency. A specific solution is: receiving a first data flow; splitting the first data flow into a plurality of data segments, and sending the plurality of data segments along at least two paths, where a first data segment in the plurality of data segments is sent along a first path, the first data segment carries first indication information, and the first indication information indicates at least one node on the first path to cache the first data segment after the at least one node receives the first data segment; and indicating at least one node that is on the first path and that is caching the first data segment to send the first data segment. Embodiments of this application are applied to a data transmission process in a multipath network.

## Description

This application claims priority to Chinese Patent Application No. 202211530354.8, filed with the China National Intellectual Property Administration on December 1, 2022 and entitled "DATA TRANSMISSION METHOD AND NODE", which is incorporated herein by reference in its entirety.

### TECHNICAL FIELD

Embodiments of this application relate to the field of communication technologies, and in particular, to a data transmission method and node.

### BACKGROUND

In a dynamic load balancing (dynamic load balancing, DLB) mechanism of a conventional data center network (data center network, DCN), data packets belonging to a same data flow may be sent over different paths with different congestion levels, causing latencies for the data packets of the same flow arriving at a destination node to be different. In other words, the data packets belonging to the same flow are out-of-order, and the destination node for receiving the data flow needs to re-order the received data packets. However, when a same destination node in a network receives a large quantity of data flows, complexity of performing re-ordering by the destination node is high, and order preserving overheads are high.

### SUMMARY

Embodiments of this application provide a data transmission method and node, to reduce re-ordering overheads of data packets in a dynamic load balancing mechanism, and improve data transmission efficiency.

To achieve the foregoing objectives, the following technical solutions are used in embodiments of this application.

According to a first aspect, a data transmission method is provided. The method includes: receiving a first data flow; splitting the first data flow into a plurality of data segments, and sending the plurality of data segments along at least two paths, where a first data segment in the plurality of data segments is sent along a first path, the first data segment carries first indication information, and the first indication information indicates at least one node on the first path to cache the first data segment after the at least one node receives the first data segment; and indicating the at least one node that is on the first path and that is caching the first data segment to send the first data segment.

When the method is applied to a first node, the first node may be a node at any layer in a multipath network. For example, the first node may be a node at any one of a core layer, an aggregation layer, an access layer, or another layer in a data center network (data center network, DCN).

Therefore, in the data transmission method provided in this application, the first node is a source node that generates a plurality of data segments. When the first node receives the first data flow, the plurality of data segments that are of the first data flow and that are obtained through splitting may be sequentially sent along a plurality of paths. For one first data segment in the plurality of data segments, the first data segment may be first indicated to be cached on a path, and then a node that caches the first data segment is indicated to send the first data segment. This is equivalent to a case in which in the plurality of data segments, a data segment that is sent later may be first cached on a path, and when a previously sent data segment arrives at a destination node of the first data flow, the data segment that is sent later continues to be sent to the destination node from a node that caches the data segment that is sent later, so that re-ordering overheads of the destination node can be reduced. Alternatively, because a data segment that is sent later may be cached, after determining that the destination node completely sends a previously received data segment, the first node may indicate a node that caches a next data segment to send the next data segment. In this way, the destination node does not need to re-order the plurality of data segments, so that re-ordering performed by the destination node on data packets can be avoided, and data transmission efficiency can be improved.

In a possible design, each of the plurality of data segments includes at least one data packet, and each of the at least one data packet carries the first indication information. In other words, the first node processes the first data flow at a granularity of a data packet, so that the data transmission efficiency can be improved.

In a possible design, each data packet of each data segment further includes flow information corresponding to each data segment. When the method is applied to the first node, the flow information corresponding to each data segment includes a node identifier of the first node and a segment identifier allocated by the first node to each data segment; or the flow information corresponding to each data segment includes a port identifier used when a node that caches each data segment receives each data segment and a segment identifier allocated by the first node to each data segment. In this way, when the first node indicates a node that caches a data segment to send the data segment, the node that caches the data segment may determine, based on flow information of the data segment, the data segment to be sent, so that when a node caches a plurality of data segments of a same data flow or different data segments of a plurality of data flows, a data segment to be sent is identified based on flow information of the data segment.

In a possible design, the first indication information further indicates address information of the at least one node that caches the first data segment. In other words, a node that caches a data segment may be indicated by the first node, and a same data segment may be stored in one node or stored in a plurality of nodes after being split.

In a possible design, the method further includes: when the plurality of data segments are sent, recording sending paths of the plurality of data segments. In this way, when the first node records a sending path of each of the plurality of data segments, this is equivalent to recording a sending sequence of data segments, so that statistics can be collected about whether each data segment is completely sent by the destination node in the corresponding sending sequence. In this way, when determining that a previous data segment is completely sent, the first node may indicate, based on the sending sequence, a next data segment to be sent from a node that caches the next data segment to the destination node.

In a possible design, the recording a sending path of each data segment includes: recording an identifier of a corresponding port for sending, by the first node, each of the plurality of data segments. This is equivalent to recording the sending sequence of the data segments by recording the port identifier corresponding to each data segment.

In a possible design, when the plurality of data segments include the first data segment and a second data segment, the sending the plurality of data segments along at least two paths includes: sending the second data segment through a first port; and sending the first data segment through a second port, where the second port is different from the first port, and the first data segment is a data segment following the second data segment. For example, after sending the second data segment through the first port, the first node determines, through dynamic load balancing, that the first data segment can be sent through the second port. The first node performs path switching, and sends the first data segment through the second port, to implement load balancing.

In a possible design, the first indication information carried in the second data segment indicates not to cache the second data segment. For example, the second data segment may be a 1^{st} data segment in the plurality of data segments sent by the first node. When the second data segment is sent to the destination node, an out-of-order case is not caused. Therefore, the second data segment may not be cached, to improve the data transmission efficiency.

In a possible design, the indicating the at least one node that is on the first path and that is caching the first data segment to send the first data segment includes: receiving at least one acknowledgement message sent by a destination node of the first data flow, where the acknowledgement message indicates that the destination node completely sends at least one data packet of the second data segment; and when a quantity of acknowledgement messages reaches a preset quantity, indicating the at least one node that is on the first path and that is caching the first data segment to send the first data segment to the destination node. For example, when receiving acknowledgement messages for all data packets of the second data segment, the first node determines that the destination node completely sends the second data segment, and may indicate the node that caches the first data segment to send the first data segment to the destination node, to ensure that the destination node does not need to re-order the data packets when receiving the first data segment, and avoid the re-ordering overheads.

In a possible design, the indicating the at least one node that is on the first path and that is caching the first data segment to send the first data segment includes: when the second data segment starts to be sent, starting a timer; and when time of the timer reaches preset time, indicating the at least one node that is on the first path and that is caching the first data segment to send the first data segment to a destination node that receives the first data flow. In other words, the first node may estimate, by using the timer, whether the destination node completely sends the second data segments, to indicate, when the timer expires, the node that caches the first data segment to send the first data segment to the destination node, so as to ensure that the destination node does not need to re-order the data packets when receiving the first data segment, and avoid the re-ordering overheads.

In a possible design, the indicating the at least one node that is on the first path and that is caching the first data segment to send the first data segment to the destination node includes: sending a first message to the at least one node that caches the first data segment, where the first message includes flow information of the first data segment, the first message indicates the node that caches the first data segment to send the first data segment to the destination node, and the flow information of the first data segment is for identifying the first data segment. In this way, the node that caches the first data segment continues to send the first data segment only when receiving the first message sent by the first node, so that the plurality of data segments are not out-of-order when being sent to the destination node, and the destination node does not need to re-order the data packets.

In a possible design, when there are a plurality of nodes that cache the first data segment, sending, through the second port, the first message to the at least one node that caches the first data segment includes: sending, through the second port, the first message to each node that caches the first data segment. To be specific, if the first data segment needs to be cached by the plurality of nodes, when indicating to continue to send the first data segment, the first node may send the first message to each node that caches the first data segment, so that a node that currently caches the first data segment sends the first data segment to the destination node.

In a possible design, the receiving a first data flow includes: receiving the first data flow from a second node, to obtain the plurality of data segments of the first data flow. The method further includes: When it is determined that a destination node that receives the first data flow completely sends the plurality of data segments, a first node sends a first acknowledgement message to the second node, where the first acknowledgement message indicates that the destination node completely sends the plurality of data segments. To be specific, when receiving a plurality of data packets from the second node, the first node may generate a plurality of data segments. That is, the first node is a source node that generates the plurality of data segments. If the first node determines that the plurality of data segments are completely sent by the destination node, the first node may send the first acknowledgement message to the upstream second node, so that when the second node also generates a data segment, the second node indicates a node that is to cache a next data segment to continue to send the data segment to the destination node. In other words, the data transmission method in this application may be used in a multipath network in a nested manner. For example, nodes at two layers in the multipath network may perform the data transmission method in this application.

In a possible design, the receiving the first data flow from a second node, to obtain the plurality of data segments of the first data flow includes: receiving and sending a plurality of data packets of the first data flow; and when it is determined that sending states of the plurality of data packets of the first data flow satisfy at least one parameter in preset configuration parameters, obtaining the plurality of data segments based on the at least one parameter in the preset configuration parameters.

The preset configuration parameters include a sent data size of any data flow on one port of the first node, time in which the first node sends the data flow, and a time gap between sending data packets of the data flow by the first node. It should be understood that the data segment in this application may be obtained through division based on various parameters, and a flowlet is formed in a burst manner. In addition, even if the data segment is obtained through division based on only the parameter, namely, the time gap in this application, a value of the time gap for forming the data segment may be much less than a value of a time gap in a flowlet manner. For example, in this application, a time gap=5 µs is much less than a time gap=500 µs that is usually configured in the flowlet manner. In this way, a case in which an excessively large time gap required by the flowlet usually cannot achieve functions in actual application can be avoided.

According to a second aspect, a data transmission method is provided. The method includes: receiving a first data segment of a first data flow sent by a second node, where the first data segment carries first indication information, and the first indication information indicates at least one node on a first path to cache the first data segment after the at least one node receives the first data segment; caching the first data segment based on the first indication information; and sending the first data segment based on an indication of the second node.

In this way, when the method is applied to a first node, the first node caches the first data segment, and continues to send the first data segment to a destination node when receiving the indication of the second node that generates the first data segment. This is equivalent to that the second node controls an occasion at which the first node sends the first data segment to the destination node. In this way, when the second node sends a plurality of data segments, an occasion at which each data segment arrives at the destination node is controlled, so that re-ordering pressure of the destination node can be reduced, even re-ordering of data packets can be avoided, and data transmission efficiency can be improved.

In a possible design, the first data segment includes at least one data packet, and each of the at least one data packet includes the first indication information.

For beneficial effects of other designs of the second aspect, refer to the descriptions of the first aspect.

In a possible design, each data packet of the first data segment further includes flow information corresponding to the first data segment, where the flow information corresponding to the first data segment includes a node identifier of the second node and a segment identifier allocated by the second node to the first data segment; or the flow information corresponding to the first data segment includes a port identifier used when the first node receives the first data segment and a segment identifier allocated by the second node to the first data segment.

In a possible design, the first indication information further indicates address information of the at least one node that caches the first data segment.

In a possible design, the sending the first data segment based on an indication of the second node includes: when a first message sent by the second node is received, sending the first data segment, where the first message indicates the first node to send the first data segment, the first message includes the flow information of the first data segment, and the flow information of the first data segment is for identifying the first data segment.

In a possible design, the method further includes: receiving at least one acknowledgement message sent by a destination node of the first data flow, where the acknowledgement message indicates that the destination node completely sends at least one data packet of the first data segment; and sending the at least one acknowledgement message to the second node.

According to a third aspect, a data transmission node is provided. The data transmission node includes: a receiving unit, configured to receive a first data flow; a processing unit, configured to split the first data flow into a plurality of data segments; and a sending unit, configured to send the plurality of data segments along at least two paths, where a first data segment in the plurality of data segments is sent along a first path, the first data segment carries first indication information, and the first indication information indicates at least one node on the first path to cache the first data segment after the at least one node receives the first data segment. The sending unit is further configured to indicate at least one node that is on the first path and that is caching at least one data segment to send the first data segment.

In a possible design, each of the plurality of data segments includes at least one data packet, and each of the at least one data packet carries the first indication information.

In a possible design, the data transmission node is a first node; and each data packet of each data segment further includes flow information corresponding to each data segment, where the flow information corresponding to each data segment includes a node identifier of the first node and a segment identifier allocated by the first node to each data segment; or the flow information corresponding to each data segment includes a port identifier used when a node that caches each data segment receives each data segment and a segment identifier allocated by the first node to each data segment.

In a possible design, the first indication information further indicates address information of the at least one node that caches the first data segment.

In a possible design, the data transmission node further includes the processing unit, where the processing unit is configured to: when the plurality of data segments are sent, record sending paths of the plurality of data segments.

In a possible design, the processing unit is configured to record an identifier of a corresponding port for sending each of the plurality of data segments.

In a possible design, when the plurality of data segments include the first data segment and a second data segment, the sending unit is configured to: send the second data segment through a first port; and send the first data segment through a second port, where the second port is different from the first port, and the first data segment is a data segment following the second data segment.

In a possible design, the first indication information carried in the second data segment indicates not to cache the second data segment.

In a possible design, the receiving unit is configured to receive at least one acknowledgement message sent by a destination node of the first data flow, where the acknowledgement message indicates that the destination node completely sends at least one data packet of the second data segment; and the sending unit is configured to: when a quantity of acknowledgement messages reaches a preset quantity, indicate the at least one node that is on the first path and that is caching the first data segment to send the first data segment to the destination node.

In a possible design, a timing unit is further included, configured to: when the second data segment starts to be sent, start a timer. The sending unit is configured to: when time of the timer reaches preset time, indicate the node that is on the first path and that is caching the first data segment to send the first data segment to a destination node that receives the first data flow.

In a possible design, the sending unit is configured to send a first message to a node that caches the first data segment, where the first message includes flow information of the first data segment, the first message indicates the at least one node that caches the first data segment to send the first data segment to the destination node, and the flow information of the first data segment is for identifying the first data segment.

In a possible design, the receiving unit is configured to receive the first data flow from a second node, to obtain the plurality of data segments of the first data flow; and the sending unit is further configured to: when it is determined that a destination node that receives the first data flow completely sends the plurality of data segments, send, for the first node, a first acknowledgement message to the second node, where the first acknowledgement message indicates that the destination node completely sends the plurality of data segments.

In a possible design, the receiving unit is configured to receive a plurality of data packets of the first data flow; the sending unit is configured to send the plurality of data packets of the first data flow; and the data transmission node further includes the processing unit, configured to: when it is determined that sending states of the plurality of data packets of the first data flow satisfy at least one parameter in preset configuration parameters, obtain the plurality of data segments based on the at least one parameter in the preset configuration parameters. The preset configuration parameters include a sent data size of any data flow on one port of the first node, time in which the first node sends the data flow, and a time gap between sending data packets of the data flow by the first node.

According to a fourth aspect, a data transmission node is provided. The data transmission node includes: a receiving unit, configured to receive a first data segment of a first data flow sent by a second node, where the first data segment carries first indication information, and the first indication information indicates at least one node on a first path to cache the first data segment after the at least one node receives the first data segment; a processing unit, configured to cache the first data segment based on the first indication information; and a sending unit, configured to send the first data segment based on an indication of the second node.

In a possible design, the first data segment includes at least one data packet, and each of the at least one data packet includes the first indication information.

In a possible design, the data transmission node is a first node, each data packet of the first data segment further includes flow information corresponding to the first data segment, where the flow information corresponding to the first data segment includes a node identifier of the second node and a segment identifier allocated by the second node to the first data segment; or the flow information corresponding to the first data segment includes a port identifier used when the first node receives the first data segment and a segment identifier allocated by the second node to the first data segment.

In a possible design, the first indication information further indicates address information of at least one node that caches the first data segment.

In a possible design, the sending unit is configured to: when a first message sent by the second node is received, send the first data segment, where the first message indicates the first node to send the first data segment, the first message includes the flow information of the first data segment, and the flow information of the first data segment is for identifying the first data segment.

In a possible design, the method further includes: receiving at least one acknowledgement message sent by a destination node of the first data flow, where the acknowledgement message indicates that the destination node completely sends at least one data packet of the first data segment; and sending the at least one acknowledgement message to the second node.

According to a fifth aspect, a communication apparatus is provided, including at least one processor. The at least one processor is connected to a memory, and the at least one processor is configured to read and execute a program stored in the memory, so that the communication apparatus performs the method in any one of the first aspect or the possible designs of the first aspect.

According to a sixth aspect, a communication apparatus is provided, including at least one processor. The at least one processor is connected to a memory, and the at least one processor is configured to read and execute a program stored in the memory, so that the communication apparatus performs the method in any one of the second aspect or the possible designs of the second aspect.

According to a seventh aspect, a chip is provided. The chip is coupled to a memory, and is configured to read and execute program instructions stored in the memory, to implement the method in any one of the first aspect or the possible designs of the first aspect.

According to an eighth aspect, a chip is provided. The chip is coupled to a memory, and is configured to read and execute program instructions stored in the memory, to implement the method in any one of the second aspect or the possible designs of the second aspect.

According to a ninth aspect, a computer-readable storage medium is provided, including computer instructions. When the computer instructions are run on an electronic device, the electronic device is enabled to perform the data transmission method in any one of the first aspect and the possible implementations.

According to a tenth aspect, a computer program product is provided. When the computer program product runs on a computer or a processor, the computer or the processor is enabled to perform the data transmission method in any one of the second aspect and the possible implementations.

According to an eleventh aspect, a communication system is provided. The communication system includes the first node in any one of the third aspect and the possible implementations and the first node in any one of the fourth aspect and the possible implementations.

It may be understood that any first node, communication apparatus, chip, communication system, computer-readable storage medium, computer program product, or the like provided above may be used in the corresponding method provided above. Therefore, for beneficial effects that can be achieved by the first node, the communication apparatus, the chip, the communication system, the computer-readable storage medium, the computer program product, or the like, refer to beneficial effects in the corresponding method. Details are not described herein again.

These aspects or other aspects in this application are simpler and easier to understand in the following descriptions.

### BRIEF DESCRIPTION OF DRAWINGS

FIG. 1 is a diagram of an architecture of a DCN according to an embodiment of this application;
FIG. 2 is a diagram of flow-based load balancing in a five-layer network according to an embodiment of this application;
FIG. 3 is a diagram of a TCP network flow according to an embodiment of this application;
FIG. 4 is a diagram in which a flowlet 1 and a flowlet 2 in one TCP flow are respectively sent through two paths according to an embodiment of this application;
FIG. 5 is a schematic flowchart of a data transmission method according to an embodiment of this application;
FIG. 6 is a schematic flowchart of a data transmission method according to an embodiment of this application;
FIG. 7 is a diagram of a multipath network according to an embodiment of this application;
FIG. 8 is a schematic flowchart of a data transmission method according to an embodiment of this application;
FIG. 9 is a diagram of a structure of a node according to an embodiment of this application; and
FIG. 10 is a diagram of a structure of a switch/router according to an embodiment of this application.

### DESCRIPTION OF EMBODIMENTS

For ease of understanding, some concepts related to embodiments of this application are described for reference by using examples. Details are as follows:
A flow (flow) refers to data sent from a same source node to a same destination node. The flow may also be referred to as a data flow.

Static load balancing (static load balancing, SLB) may also be referred to as static distribution or flow-based distribution (flow LB). It may be understood as that a switching node may select one of a plurality of available paths as a sending path of a flow based on a calculation result of a hash (hash) algorithm.

Dynamic load balancing (dynamic load balancing, DLB) allows dynamic switching between sending paths for data packets belonging to a same flow, so that traffic is more evenly distributed.

Re-ordering: In packet allocation-based multipath transmission, data packets belonging to a same data flow may be transmitted along different paths, but the data packets may be out-of-order at a receive end because latencies of the different paths are different; therefore, the receive end needs to establish a re-order cache to re-order the received data packets to ensure that the data packets are delivered to an application layer in a sending sequence.

The following describes technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

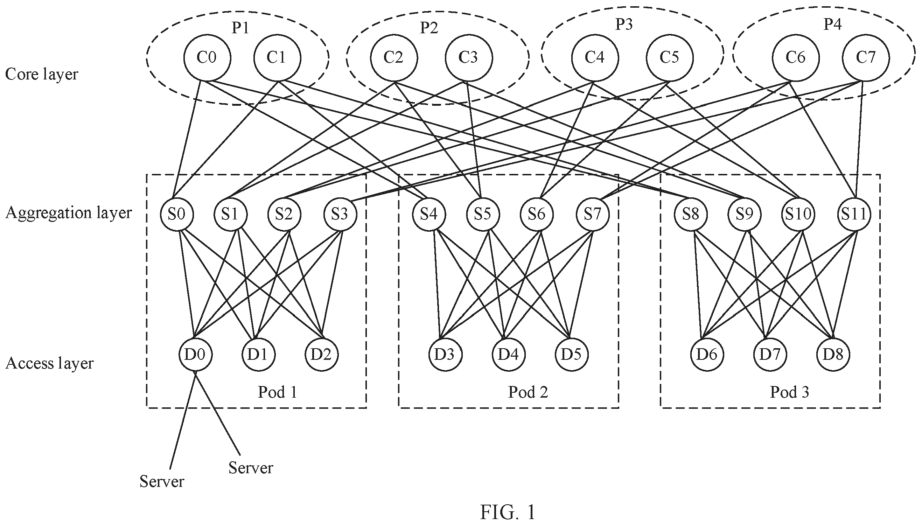

Embodiments of this application may be applied to a data center network (data center network, DCN). The DCN usually uses a spine-leaf (spine-leaf) networking mode, and may provide a fully-connected network for a plurality of servers (servers) in the DCN. FIG. 1 is a diagram of an architecture of a DCN. The DCN includes a three-layer network, including a core (core) layer, an aggregation (aggregation) layer, and an access (access) layer. Certainly, the DCN may alternatively be a two-layer network or a network with more than three layers. Each layer includes a plurality of switching nodes, which are also referred to as switching devices.

Refer to FIG. 1. The access layer may also be referred to as an onion route (the onion route, TOR) layer. A downlink port of a switching node S (for example, nodes D0 to D8) at the access layer may be connected to at least one server, and an uplink port may be connected to a switching node (for example, nodes S0 to S11) at the aggregation layer.

A downlink port of the switching node at the aggregation layer is connected to the switching node at the access layer, and an uplink port is connected to different switching nodes (for example, nodes C0 to C7) at the core layer. The aggregation layer and the access layer may be combined into a plurality of pods (pods). For example, the switching node at the aggregation layer and the switching nodes that is at the access layer and that is directly connected to the switching node at the aggregation layer may form one pod, for example, a pod 1 to a pod 3 in FIG. 1. The pod may also be referred to as a cluster (Cluster). In one pod, a plurality of nodes at the aggregation layer and a plurality of nodes at the access layer are usually in a fully connected relationship. For example, in the pod 1, the nodes S0 to S3 and the nodes D0 to D2 are in a fully connected relationship. The switching node at the aggregation layer may complete traffic exchange between a plurality of nodes that are in a same pod and that cross the access layer. For example, a traffic exchange path L1 from the source node D0-S1-destination node D2 is shown in FIG. 1.

The core layer may also be referred to as a spine (spine) layer. A set of switching nodes at the core layer that are directly connected to switching nodes at the aggregation layer may be referred to as a spine plane, which is also referred to as a plane (plane) for short. It can be learned that the switching nodes at the core layer shown in FIG. 1 may be divided into four planes: P1 to P4. Nodes on each plane are directly connected to different switching nodes at the aggregation layer in each pod, and different switching nodes at the aggregation layer in a same pod may be connected to different planes. For example, the node S0 at the aggregation layer is connected to a node C0 and a node C1 in the plane P1, the node S1 is connected to a node C2 and a node C3 in the plane P2, the node S2 is connected to a node C4 and a node C5 in the plane P3, and the node S3 is connected to a node C6 and a node C7 in the plane P4. The connection relationship between the node S1 and the nodes at the aggregation layer is similar to a connection relationship between the node S0 and the nodes at the aggregation layer. Therefore, the switching nodes at the core layer can complete traffic exchange across pods. For example, a traffic exchange path L2 from the source node D0-S0-C0-S4-destination node D4 is shown in FIG. 1.

In embodiments of this application, the switching node may be referred to as a node for short, the source node may also be understood as a source switching node, and the destination node may also be referred to as a destination switching node. The switching node may be, for example, a switching device, for example, a device such as a switch or a router.

It can be learned that, in the DCN, there are a plurality of available paths from any source node to a destination node. For example, paths from a switching node at the access layer to four switching nodes at the aggregation layer in a same pod are all available paths, and paths from a switching node at the aggregation layer to a switching node at the core layer in each plane is an available path. Data sent by any server needs to be evenly distributed to available paths at each layer through load balancing (load balancing, LB), to maximize utilization of bandwidth of the DCN. Currently, there are a plurality of load balancing algorithms for the DCN in the industry, but there may be a problem of a poor balancing effect or poor balancing performance, or high implementation complexity.

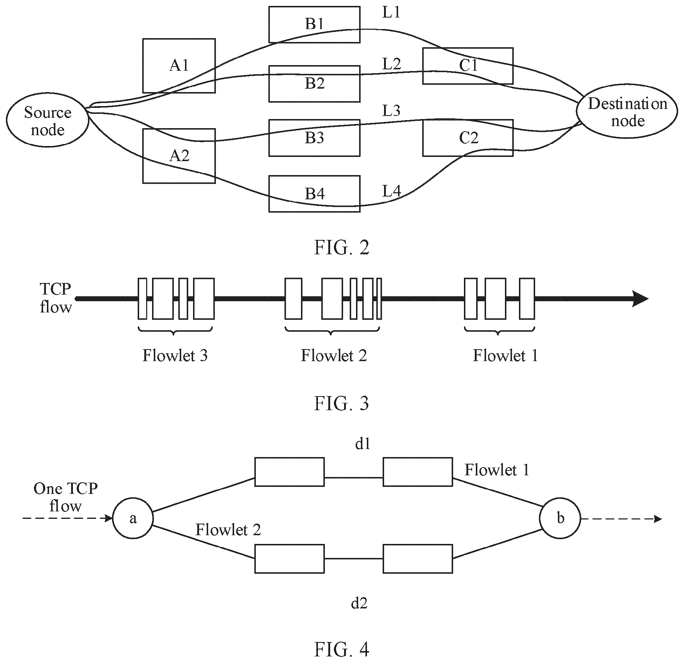

For example, in a DCN-based load balancing mechanism, each switching node in the DCN performs calculation on a flow by using a hash (hash) algorithm (for example, by using a 5-tuple algorithm), and selects one of a plurality of available paths in equal cost multi-path (Equal Cost Multi-path, ECMP) as a sending path of the flow based on a hash calculation result. FIG. 2 is a diagram of flow-based load balancing in a five-layer network. The five-layer network includes a layer at which a source node is located, a layer at which nodes A1 and A2 are located, a layer at which nodes B1 to B4 are located, a layer at which nodes C1 and C2 are located, and a layer at which a destination node is located. For example, when the source node sends a flow to the destination node, the hash calculation result may indicate any path in L1, L2, L3, or L4. This implementation mechanism may be referred to as flow-based distribution/flow-based load balancing (flow LB), or referred to as static distribution/static load balancing (Static LB), and is easy to implement. In addition, the hash algorithm can ensure that data packets belonging to a same flow all pass through a same path, no out-of-order phenomenon occurs, and the destination node does not need to re-order the received data packets. However, a hash conflict occurs in the load balancing mechanism of the hash algorithm for path selection. To be specific, in the hash algorithm, a plurality of flows are inevitably distributed to a same uplink port. If these flows have traffic bursts simultaneously, the uplink port may be congested. For example, the hash conflict may occur on a port from the access layer to the aggregation layer, or may occur on a port from the aggregation layer to the core layer.

Therefore, there is an optimization algorithm based on load balancing, and the concept of flowlet is proposed. FIG. 3 is a diagram of a transmission control protocol (Transmission Control Protocol, TCP) network flow. A TCP flow includes a flowlet 1, a flowlet 2, and a flowlet 3. In the TCP, data packets are usually sent in a burst (burst) manner, and each segment of burst data packets may be referred to as a flowlet. If path latencies of two paths are d1 and d2, provided that a sending gap gap between two flowlets of a same flow is greater than |d1-d2|, the two flowlets may be sent through the two different paths, without worrying about an out-of-order case. For example, FIG. 4 is a diagram in which a flowlet 1 and a flowlet 2 in a TCP flow are respectively sent through two paths. There are two paths between a source node a and a destination node b. A latency of one path is d1, and a latency of the other path is d2. A sending gap gap between the flowlet 1 and the flowlet 2 is greater than |d1-d2|. The source node a first sends the flowlet 1 on the path whose latency is d1, and then sends the flowlet 2 on the path whose latency is d2. In this way, the destination node b first receives the flowlet 1, then receives the flowlet 2, and no out-of-order case occurs. The concept of flowlet may be understood as an implementation of dynamic load balancing. The dynamic load balancing allows dynamic switching between sending paths for data packets belonging to a same flow, so that traffic is more evenly distributed. However, because bandwidth of a DCN is large, a network response speed is high, a large amount of data is transmitted in a unit of time (for example, per second) on a path, and a latency of a path is low, causing a small latency difference between paths accordingly. In addition, the gap is usually set to be large. When the gap is set to be excessively large, a flowlet formed through each burst easily triggers path switching. However, when the gap is large, a granularity of the flowlet formed through each of burst is large, and it is difficult to trigger fine-grained dynamic load balancing. In addition, for example, when there is pacing (pacing) control on the source node in the TCP, it is difficult to have a sufficiently large gap to partition flowlets. If a pause (pause) mechanism is triggered in the DCN, data is waiting to be sent, and it cannot be ensured that the gap is greater than the latency difference between the paths. As a result, an out-of-order case may occur on a receive side.

In another load balancing mechanism similar to that in the DCN, each switching node distributes data packets evenly on a plurality of available paths, and a plurality of data packets belonging to a same flow may be sent through different paths. Such a mechanism may be referred to as packet spray (Packet Spray). The foregoing problem of the hash conflict can be avoided, and multipath bandwidth can be better used. However, because congestion levels of different paths are different, latencies of different data packets may be different, and time at which the different data packets arrive at the destination node may be different. Therefore, the data packets belonging to the same flow may be out-of-order, and the destination node needs to perform re-ordering. Re-ordering needs to exclusively occupy re-ordering logic in an entire flow periodicity, which is referred to as a re-ordering channel (Re-ordering Channel, RC) for short. When there are a large quantity of flows in a network, the destination node needs to have a sufficient quantity of re-ordering channels. This is because each flow that uses packet spray occupies a re-ordering channel. If there are a large quantity of flows, a large quantity of re-ordering channels are required accordingly, a re-ordering implementation is complex, and overheads are high.

Therefore, this application provides a data transmission method and node, applied to a multipath network scenario, for example, a topology structure such as a fat-tree (Fat-tree) or a dragonfly (Dragonfly) of a DCN.

In the method, for a data flow, dynamic load balancing may be performed at a granularity of a data segment (flowpac). A data segment may include at least one data packet, and the concept of the data segment is described below. When a source node in a multipath network obtains a plurality of data segments of a data flow, the source node sends the plurality of data segments along at least two paths, where at least one of the plurality of data segments carries indication information that indicates caching; one or more downstream intermediate nodes of the source node cache the data segment based on the indication information; and the source node that generates the plurality of data segments controls a sending occasion on which the intermediate node sends the cached data segment. This is equivalent to a case in which the source node controls time at which the plurality of sent data segments arrive at a destination node, so that a probability that the plurality of data segments of the same flow are out-of-order on the destination node can be reduced. In this way, network load balancing can be ensured, and overheads of re-ordering the data packets by the destination node can be reduced. Alternatively, in some embodiments, the destination node may be prevented from re-ordering the data packets.

Embodiments of this application may be further applied to another multipath scenario. For example, when embodiments are applied to a network-on-chip (Network-on-Chip, NOC) inside a chip or between chips, there are also multipath and order preserving problems between communication nodes. When this application is applied to the network-on-chip, traffic load balancing can also be implemented, and the destination node does not need to perform ordering. In addition, in the network-on-chip, a mechanism for performing notification between nodes and a notification format may be flexibly customized.

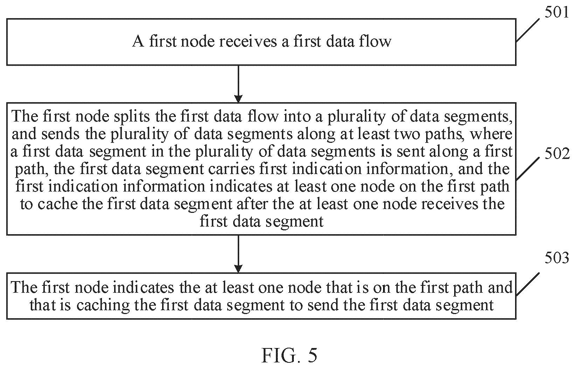

Based on the foregoing scenario, an embodiment of this application provides a data transmission method. FIG. 5 is a schematic flowchart of a data transmission method. For example, the method is applied to a first node. The method includes the following procedure.

501: The first node receives a first data flow.

A scenario of a DCN is used as an example. The first node may be a node at any layer in the DCN. For example, the first node may be a switching node at an access layer, a switching node at an aggregation layer, or a switching node at a core layer. In some embodiments, the first node may alternatively be a server connected to the access layer.

In some embodiments, the first node may be understood as an intermediate node that forwards some of data segments of the first data flow.

502: The first node splits the first data flow into a plurality of data segments, and sends the plurality of data segments along at least two paths, where a first data segment in the plurality of data segments is sent along a first path, the first data segment carries first indication information, and the first indication information indicates at least one node on the first path to cache the first data segment after the at least one node receives the first data segment.

That is, sending paths of at least two of the plurality of data segments are different.

In some embodiments, the first node may be considered as a source node that generates the plurality of data segments. For example, the first node receives the first data flow from a second node, to obtain the plurality of data segments of the first data flow. A manner of generating the plurality of data segments is described below by using an example.

For example, when sending the plurality of data segments, the first node may perform dynamic load balancing before sending each data segment, to determine a sending path suitable for each data segment, that is, determine a port used when each data segment is sent on the first node. In this case, when continuously sending two data segments, the first node may switch paths, that is, a port for sending a next data segment may be different from a port for sending a previous data segment.

Therefore, when the plurality of data segments include the first data segment and a second data segment, that the first node sends the plurality of data segments along the at least two paths may include: sending the second data segment through a first port of the first node, and sending the first data segment through a second port of the first node, where the second port is different from the first port, and the first data segment is a data segment following the second data segment.

Alternatively, in some embodiments, that the first node sends the plurality of data segments along the at least two paths may include: sending the first data segment and the second data segment through the first port of the first node. That is, the first data segment and the second data segment are sent through a same port of the first node. Assuming that the first node sends the first data segment and the second data segment to a third node, after the third node receives the first data segment and the second data segment, the third node may alternatively send the first data segment and the second data segment to a downstream node through different ports through dynamic load balancing.

When the second data segment is sent through the first port of the first node, and the first data segment is sent through the second port of the first node, the plurality of data segments include the second data segment, and the second data segment may be a 1^{st} data segment in the plurality of data segments. In this case, the first indication information carried in the second data segment may indicate not to cache the second data segment. First indication information carried in a data segment other than the second data segment in the plurality of data segments may indicate to cache all the other data segments.

In some embodiments, each of the plurality of data segments includes at least one data packet, and each of the at least one data packet carries the first indication information.

In some embodiments, the first indication information further indicates address information of the at least one node that caches the first data segment. To be specific, each data segment may be cached by one or more nodes in subsequent nodes of the first node. When determining that address information carried in each data segment is consistent with address information of a current node, the node that forwards the data segment caches the data segment.

In some embodiments, when the first indication information indicates the address information of the at least one node that caches the first data segment, for the first data segment, the first indication information may further indicate the at least one node that caches the first data segment to cache some of data packets of the data segment. That is, the first data segment that needs to be cached may be split and then cached in two or more nodes. For example, the first indication information carried in the first data segment indicates the address information of the at least one node that caches the first data segment, and further indicates the at least one node to separately cache some of data packets of the first data segment. For example, the first indication information carried in the first data segment may indicate a node 1 to cache the first M data packets of the first data segment, and a node 2 to cache the last N data packets of the first data segment. M and N are positive integers.

In some embodiments, the first indication information may not need to indicate the address information of the at least one node, and some of specified nodes in a network may be specified in advance to cache a received data segment.

In some embodiments, when the first node sends the plurality of data segments along the at least two paths, the first node may record sending paths of the plurality of data segments. This is equivalent to a case in which when sequentially sending the plurality of data segments, the first node records a sending sequence of the plurality of data segments.

For example, when sending the plurality of data segments along the at least two paths, the first node records a port identifier corresponding to each of the plurality of data segments sent by the first node. In this way, the first node may collect, based on the port identifier corresponding to the data segment, statistics about whether a data segment sent through a port is completely sent by a destination node. If the first node learns, through statistics collection, that a data packet included in a previous data segment is completely sent through a port corresponding to the previous data segment, the first node may indicate, based on the sending sequence, a node that caches a next data segment to send the next data segment.

503: The first node indicates the at least one node that is on the first path and that is caching the first data segment to send the first data segment.

When the first node indicates nodes that cache a plurality of data segments to send the plurality of data segments, it is equivalent to a case in which the first node controls a sending sequence of the nodes that cache the plurality of data segments. A destination node that receives the plurality of data segments may sequentially receive the plurality of data segments based on the sending sequence of the plurality of data segments. That is, for the destination node, an out-of-order case is not likely to occur when the plurality of data segments are received.

Examples in step 502 are used. In some embodiments, that the first node indicates the at least one node that is on the first path and that is caching the first data segment to send the first data segment may include: The first node receives at least one acknowledgement (Acknowledgement, ACK) message sent by the destination node of the first data flow, where the acknowledgement message indicates that the destination node completely sends at least one data packet of the second data segment. When a quantity of acknowledgement messages reaches a preset quantity, the first node indicates the node that is on the first path and that is caching the first data segment to send the first data segment to the destination node.

When one acknowledgement message may indicate that the destination node completely sends one or more data packets of the second data segment, it is equivalent to a case in which the destination node may not feed back one acknowledgement message for each data packet, but may feed back one acknowledgement message for a plurality of data packets. It is described herein that when the quantity of acknowledgement messages reaches the preset quantity, the node that caches the first data segment may be indicated to send the first data segment. This may be understood as that there is a time difference between time when the destination node completely sends the second data segment and time when the node that caches the first data segment starts to send the first data segment. To reduce the time difference, the first node may indicate, in advance when the destination node is to completely send the second data segment, the node that caches the first data segment to start to send the first data segment. In this case, when the first data segment arrives at the destination node, the destination node may completely send the second data segment. This can also reduce re-ordering overheads of the destination node.

The examples in step 502 are used. In some embodiments, that the first node indicates the node that is on the first path and that is caching the first data segment to send the first data segment may include: when the first node starts to send the second data segment, starting a timer. When time of the timer reaches preset time, the at least one node that is on the first path and that is caching the first data segment is indicated to send the first data segment to a destination node that receives the first data flow. This implementation may be understood as that when determining that the time of the timer reaches the preset time, the first node estimates that the destination node completely sends the second data segment, and then indicates the node that caches the first data segment to send the first data segment. In this way, when the first data segment arrives at the destination node, the destination node is not out-of-order, so that a probability of re-ordering of the destination node is reduced.

In some embodiments, each data packet of each data segment may further include flow information corresponding to each data segment. In this way, it is convenient for a node that caches a data segment to identify, based on the flow information, the to-be-sent data segment when the node receives an indication for continuing to send the data segment.

For example, the flow information corresponding to each of the at least one to-be-cached data segment includes a node identifier of the first node and a segment identifier allocated by the first node to each data segment. For example, for the first data segment, a high-order bit of a bit value of a field of the flow information herein indicates the node identifier of the first node, and a low-order bit indicates a segment identifier of the first data segment.

Alternatively, the flow information corresponding to each of the at least one to-be-cached data segment includes a port identifier used when a node that caches each data segment receives each data segment and a segment identifier allocated by the first node to each data segment. In this case, for example, for the first data segment, the node that caches the first data segment may be a next-hop node of the first node. When the first node and the next-hop node determine to send the first data segment to a third port of the next-hop node through the second port of the first node, a high-order bit of a bit value of a field of flow information of the second data segment may indicate an identifier of the third port, and a low-order bit indicates the segment identifier of the first data segment.

Based on this, that the first node indicates the at least one node that is on the first path and that is caching the first data segment to send the first data segment to the destination node may include: The first node sends a first message to the node that caches the first data segment, where the first message includes flow information of the first data segment, the first message indicates the node that caches the first data segment to send the first data segment to the destination node, and the flow information of the first data segment is for identifying the first data segment.

For example, when the first node sends the plurality of data segments, a bit value of a field of the first indication information carried in a data segment other than a 1^{st} sent data segment is, for example, "1", indicating that the other data segments need to be cached. For example, the other data segments include the first data segment. When the first node indicates the node that caches the first data segment to continue to send the first data segment, the first message may carry the first indication information. In this case, a bit value of a field of the first indication information is, for example, "0", indicating that the first data segment does not need to be cached. For example, the first message sent by the first node to the node that caches the first data segment carries the first indication information, and a bit value of a field of the first indication information is, for example, "0", indicating that the node that caches the first data segment does not need to cache the first data segment, that is, continues to send the first data segment.

In this example, a bit value of a field of the first indication information carried in the second data segment in the examples in step 502 may also be, for example, "0", indicating a node that forwards the second data segment not to cache the second data segment.

In some embodiments, the first node may maintain a mapping table of the first node. The mapping table includes a correspondence between at least one data segment that needs to be cached and a node for caching a data segment, and one data segment that needs to be cached may correspond to at least one node, that is, one data segment that needs to be cached may be cached by at least one node. When the first node indicates a cached data segment to be sent to the destination node, the first node may send, based on the mapping table, the first message to a node that caches the data segment, where the first message carries flow information of the data segment, and a bit value of a field of the first indication information in the first message is "0". For example, if there are a plurality of nodes that cache the first data segment, when the first node indicates the plurality of nodes that cache the first data segment to send the first data segment, the first node sends, based on the mapping table, the first message to the plurality of nodes that cache the first data segment, where the first message carries the flow information of the first data segment, and a bit value of a field of the first indication information in the first message is "0".

In some embodiments, when there are a plurality of nodes that cache the first data segment, if the first node indicates the plurality of nodes that cache the first data segment to send the first data segment to the destination node, the first node may send the first message to a downstream node through a port used by the first node to send the first data segment. When receiving the first message, each downstream node may search, based on the flow information of the first data segment carried in the first message, whether the node locally caches the first data segment. If the node locally caches the first data segment, the node only needs to send the first data segment to the destination node. If the node does not cache the first data segment, the node only needs to forward the first message to a downstream node, until a node that caches the first data segment identifies, based on the first message, that the first data segment needs to be sent.

In some embodiments, a mechanism of the data transmission method in this application may be configured in a node at a layer in the DCN. Alternatively, the mechanism may be configured in nodes at a plurality of layers in the DCN. In this case, a node at each layer in the DCN may have an implementation similar to that of the first node, that is, serve as a source node for generating a plurality of data segments.

If the first node receives the first data flow from the second node, the plurality of data segments of the first data flow are generated. When the first node determines that the destination node that receives the first data flow completely sends the plurality of data segments, the first node may send a first acknowledgement message to the second node, where the first acknowledgement message indicates that the destination node completely sends the plurality of data segments. In this case, the plurality of data segments generated by the first node may be obtained by splitting one data segment received by the second node. In this way, if the second node also performs a data transmission method similar to that of the first node, the second node may learn of sending states of the plurality of data segments generated by the second node on the destination node, so that the second node may also control a sending sequence of the plurality of data segments generated by the second node, to reduce re-ordering pressure of the destination node.

Therefore, in the data transmission method provided in this application, when receiving the first data flow, and sending the plurality of obtained data segments of the first data flow along the plurality of paths, the first node may indicate the first data segment in the plurality of data segments to be cached on the path, and then indicate the at least one node that is on the first path and that is caching the first data segment to send the first data segment. In this implementation, in the plurality of data segments, a data segment that is sent later may always arrive at the destination node of the first data flow after a previous sent data segment. For example, when the previous data segment of the first data segment is sent to the destination node, the node that caches the first data segment is then indicated to send the first data segment to the destination node. The destination node may not need to re-order the plurality of data segments, so that the re-ordering overheads of the destination node can be reduced, and data transmission efficiency can be improved.

In some embodiments, the plurality of data segments sent by the first node and mentioned above may be obtained by dividing, by the first node, the received first data flow based on preset configuration parameters.

According to descriptions of the embodiment corresponding to FIG. 5, for example, when the first node receives and sends a plurality of data packets of the first data packet, and determines that sending states of the plurality of data packets of the first data flow satisfy at least one parameter in the preset configuration parameters, the first node obtains the plurality of data segments based on the at least one parameter in the preset configuration parameters. For example, the preset configuration parameters include a sent data size (size) of any data flow on one port of the first node, time (time) in which the first node sends the data flow, and a time gap (gap) between sending data packets of the data flow by the first node.

For example, if the first node determines that data packets of the first data flow that are sent on a port 1 of the first node are continuously sent, and an accumulated quantity of sent data packets of the first data flow that are forwarded reaches the sent data size in the preset configuration parameters, the first node may determine to forward the data packets of the first data flow at a granularity of a data segment, divide a subsequently received data packet of the first data flow based on the size in the preset configuration parameters, to obtain a plurality of data segments, and determine, based on dynamic load balancing, a sending path of each of the plurality of data segments, that is, a sending port corresponding to each data segment on the first node.

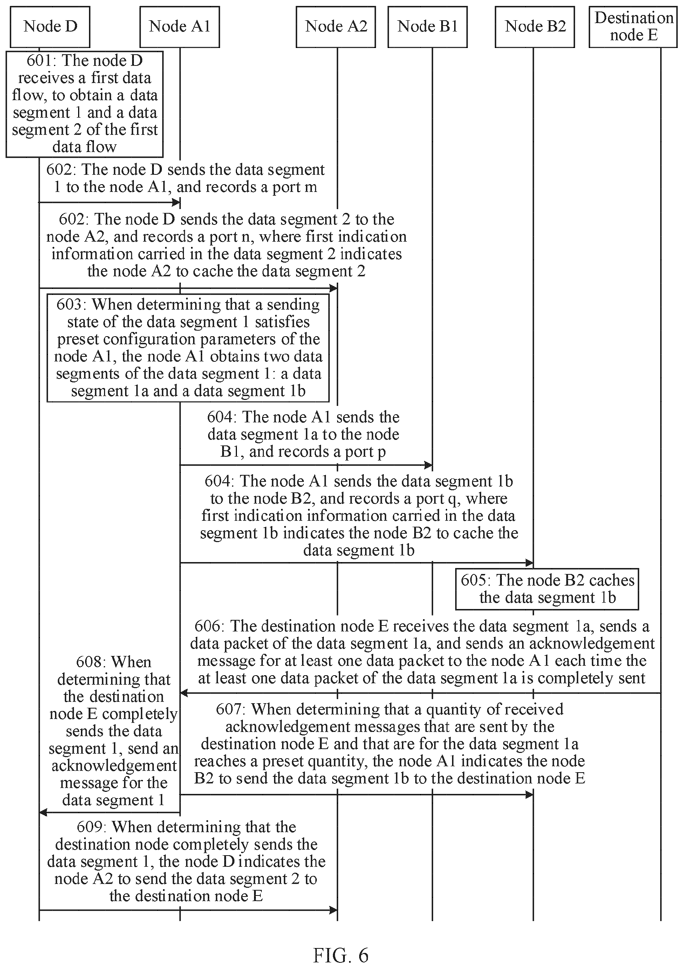

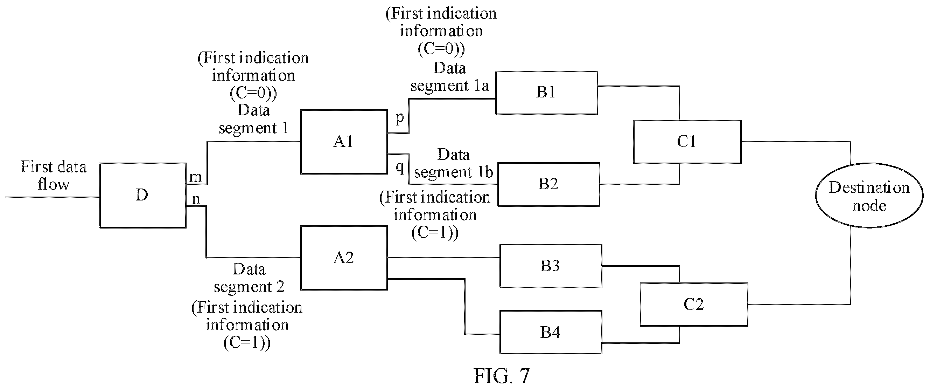

Based on this, FIG. 6 is a schematic flowchart of a data transmission method according to an embodiment of this application. In addition, an example in which the method is applied to a multipath network shown in FIG. 7 is used for description. Refer to FIG. 7. The network includes at least five layers. A first layer includes a node D, a second layer includes nodes A1 and A2, a third layer includes nodes B1 to B4, a fourth layer includes nodes C1 and C2, and a fifth layer includes a destination node. In addition, the destination node is shown as a destination node E. The network shown in FIG. 7 is applied. Assuming that a mechanism of the data transmission method in this application is deployed at the first layer and the second layer, the method may include the following procedure. Certainly, the mechanism may alternatively be deployed on a node at one of the five layers or on nodes at more than two layers. This is not limited in this application.

601: The node D receives a first data flow, to obtain a data segment 1 and a data segment 2 of the first data flow.

For example, the node D receives the first data flow from an uplink directly connected node, and in preset configuration parameters configured in the node D, gap=5 microseconds (µs), size=256 KB, and time=infinity (infinity). When the node D determines, based on a plurality of data packets of the first data flow forwarded through a port of the node D, that the data packets of the first data flow are continuously sent and therefore cannot satisfy a gap value of the gap, the node D may split, based on the size=256 KB, the data packets of the first data flow that are continuously received, to obtain the data segment 1 and the data segment 2, and perform dynamic load balancing based on that the data segment 1 and the data segment 2 both have a size of 256 KB, to be specific, determine sending paths of the data segment 1 and the data segment 2 on the node D.

For another example, the node D receives a plurality of data packets of the first data flow from an uplink directly connected node, and in preset configuration parameters configured in the node D, gap=50 µs, size=64 KB, and time=infinity. When the node D determines, based on a plurality of data packets of the first data flow forwarded through a port of the node D, that a quantity of data packets of the first data flow is small, the node D may send, based on the parameter, namely, the gap, a subsequently received data packet of the first data flow. In this case, each subsequently received data packet may be considered as a data segment, to obtain a plurality of data segments including the data segment 1 and the data segment 2. The data segment 1 and the data segment 2 may be sent at a gap of 50 µs, or dynamic load balancing may be performed at a gap greater than 50 µs.

It should be noted that, for the node D, no data packet of the first data flow is sent in a gap between the data segment 1 and the data segment 2, but a data packet of another data flow is allowed to be sent in the gap.

For another example, in preset configuration parameters configured in the node D, if a value of a gap is large, for example, gap=200 µs, size=infinity, and time=infinity, a plurality of data segments of the first data flow obtained by the node D are similar to the foregoing flowlet, a gap between the data segments is greater than a latency difference between two paths, and the destination node E does not need to re-order the data packets.

For another example, if in preset configuration parameters configured in the node D, gap=infinity, size=128 KB, and time=infinity, the node D obtains a plurality of data segments of the first data flow based on the size, and performs dynamic load balancing based on a size of 128 KB of each data segment.

Although in the foregoing examples, the data segments are obtained through division based on the three parameters: gap, size, and time, in actual application, more parameters may be used for the division of the data segments. For example, a rate (rate) may be further included.

It should be understood that the data segment in this application may be obtained through division based on various parameters, and a flowlet is formed in a burst manner. In addition, even if only the parameter gap is used for division of data segments in this application, a value of a gap for forming the data segments may be much less than a value of a gap in a flowlet manner. For example, in this application, gap=5 µs is much less than gap=500 µs that is usually configured in the flowlet manner. In this way, a case in which an excessively large gap required by a flowlet usually does not take effect in actual application can be avoided.

In addition, in actual application, a plurality of groups of preset configuration parameters may be set in one node, and different preset configuration parameters may be used for data flows of different service types as required, to satisfy a requirement for service differentiation. In addition, in actual application, a plurality of data flows may be aggregated together, and then a set of preset configuration parameters is used for division of data segments. For example, a plurality of data flows with a same source node but different destination nodes may be aggregated, or a plurality of data flows with different source nodes but a same destination node may be aggregated.

In some embodiments, lengths of the plurality of data segments obtained by the node D through division may be the same, or may not be completely the same.

In some embodiments, the preset configuration parameters may be configured on a node at a layer in the multipath network, or the preset configuration parameters may be configured on nodes at a plurality of layers in the multipath network. This is not limited in this application.

In some embodiments, when the node D determines that a sending state of the first data flow satisfies the preset configuration parameters and obtains the plurality of data segments, the node D may perform dynamic load balancing on the plurality of data segments, that is, the node D may actively switch a path to send the plurality of data segments. A specific dynamic load balancing mechanism may be implemented in a plurality of manners. For example, path switching may be performed with reference to a congestion state of each sending path (sending port) of the node D. For example, for the congestion state, refer to a send queue depth of each sending path, a sending rate that is of each sending path and on which statistics collection is performed by using a sliding window (sliding window), or a congestion state that is of each sending path and that is fed back by the network. This is not limited in this application.

602: The node D sequentially sends the data segment 1 and the data segment 2, where the data segment 1 is sent to the node A1, and the data segment 2 is sent to the node A2; and records a port m for sending the data segment 1 and a port n for sending the data segment 2 by the node D. First indication information carried in the data segment 2 indicates the node A2 to cache the data segment 2.

To be specific, when determining to send the data segment 1 and the data segment 2, the node D determines, based on the dynamic load balancing mechanism, that the data segment 1 is sent to the node A1 through the port m of the node D, and the data segment 2 is sent to the node A2 through the port n of the node D. The node D records that the port m of the node D corresponds to the data segment 1 and the port n of the node D corresponds to the data segment 2, and the data segment 1 is sent before of the data segment 2.

For example, if the data segment 1 is a 1^{st} data segment that is of the first data flow and that is sent by the node D, each data packet in the data segment 1 may carry the first indication information, and a bit value of a field, for example, a C (indicating cache) field, that is in the first indication information and that indicates whether to perform caching may be "0", indicating the node A1 not to cache the received data segment 1, and normally send the data segment 1. A bit value of a C field in the first indication information carried in each data packet in the data segment 2 may be "1", indicating the node A2 to cache the received data segment 2, and send the data segment 2 when the node D determines that the data segment 1 is completely sent by the destination node, to ensure that the data segment 1 and the data segment 2 are not out-of-order on the destination node.

To enable the node A2 that caches the data segment 2 to quickly identify the to-be-sent data segment 2 when the node A2 receives an indication of continuing to send the data segment 2, when the node D sends the data segment 2, each data packet in the data segment 2 may carry flow information of the data segment 2.

For example, an identifier of the node D may be used as a high-order bit of a bit value of a field of the flow information of the data segment 2, and a segment identifier allocated by the node D to the data segment 2 may be used as a low-order bit. Alternatively, an identifier of a port used when the node A2 receives the data segment 2 may be used as a high-order bit of a bit value of a field of the flow information of the data segment 2, and a segment identifier allocated by the node D to the data segment 2 may be used as a low-order bit.

In some embodiments, to reduce overheads, the data segment 2 may alternatively be used as a granularity, and the flow information of the data segment 2 is a segment identifier of the data segment 2. This requires that the node A2 can identify a boundary of the data segment 2. For example, a last data packet of the data segment 2 carries a tag (tag) indicating the last data packet of the data segment 2.

603: The node A1 forwards some of data packets of the data segment 1, and when determining that a sending state of the data segment 1 on the node A1 satisfies preset configuration parameters of the node A1, the node A1 obtains two data segments of the data segment 1: a data segment 1a and a data segment 1b.

For example, assuming that the preset configuration parameters configured in the node A1 are gap=5 µs, S=128 KB, and time=infinity, when the node A1 forwards the data packets of the data segment 1, some of the data packets of the data segment 1 that are forwarded through one port of the node A1 are continuously sent, and a gap condition of the gap=5 µs cannot be satisfied. The node A1 may divide remaining data packets when continuing to forward the remaining data packets of the data segment 1, to obtain a plurality of data segments formed by the node A1. For example, the plurality of data segments include the data segment 1a and the data segment 1b, and sizes of the data segment 1a and the data segment 1b are 128 KB. Alternatively, the data segment 1a is of 128 KB, and a data size of the data segment 1b is greater than 128 KB or less than 128 KB. In addition, sending paths, that is, sending ports, of the data segment 1a and the data segment 1b on the node A1 are determined through dynamic load balancing.

604: The node A1 sequentially sends the data segment 1a and the data segment 1b, where the data segment 1a is sent to the node B1, and the data segment 1b is sent to the node B2; and records a port p for sending the data segment 1a and a port q for sending the data segment 1b by the node A1. The first indication information carried in the data segment 1b indicates the node B2 to cache the data segment 1b.

Similar to step 602, when determining to send the data segment 1a and the data segment 1b, the node A1 determines, based on the dynamic load balancing mechanism, that the data segment 1a is sent to the node A1 through a port r of the node A1, and the data segment 1b is sent to the node A2 through a port s of the node A1. The node A1 records the port r that is of the node A1 and that corresponds to the data segment 1a and the port s that is of the node A1 and that corresponds to the data segment 1b, and the data segment 1a is sent before the data segment 1b.

For example, if the data segment 1a is a 1^{st} data segment that is of the first data flow and that is sent by the node A1, each data packet in the data segment 1a may carry the first indication information, and a bit value of a C field that is in the first indication information and that indicates whether to perform caching may be "0", indicating the node B1 not to cache the received data segment 1a, and normally send the data segment 1a. A bit value of a C field in the first indication information carried in each data packet in the data segment 1b may be "1", indicating the node B2 to cache the received data segment 1b, send the data segment 1b when the node A1 determines that the data segment 1a is completely sent by the destination node, to ensure that the data segment 1a and the data segment 1b are not out-of-order on the destination node.

Similar to step 602, to enable the node B2 that caches the data segment 1b to quickly identify the to-be-sent data segment 1b when the node B2 receives an indication of continuing to send the data segment 1b, when the node A1 sends the data segment 1b, each data packet in the data segment 1b may carry flow information of the data segment 1b.

For example, an identifier of the node A1 may be used as a high-order bit of a bit value of a field of the flow information of the data segment 1b, and a segment identifier allocated by the node A1 to the data segment 1b may be used as a low-order bit. Alternatively, an identifier of a port used when the node B2 receives the data segment 1b may be used as a high-order bit of a bit value of a field of the flow information of the data segment 1b, and a segment identifier allocated by the node A1 to the data segment 1b may be used as a low-order bit.

605: The node B2 caches the data segment 1b.

To be specific, when the node B2 receives a data packet of the data segment 1b, and identifies that the bit value of the C field in the first indication information carried in each data packet of the data segment 1b may be "1", the node B2 caches the data packet of the data segment 1b each time the node B2 receives a data packet of the data segment 1b.

For example, a data structure (for example, a queue, cache management, or the like) and logic may be configured in the node B2 to manage the data segment 1b to be cached.

606: The destination node E receives the data segment 1a, sends a data packet of the data segment 1a, and sends an acknowledgement message for at least one data packet to the node A1 each time at least one data packet of the data segment 1a is completely sent.

For example, in a DCN, if the destination node E is an access layer node, when the destination node does not receive a data packet of the data segment 1a within a long period of time after receiving a data packet of the data segment 1a, or when the destination node E identifies a boundary of the data segment 1a, to determine that all data packets of the data segment 1a are received, the destination node E may send the data segment 1a to a server connected to the destination node E. In addition, each time the destination node E sends one data packet of the data segment 1a, the destination node E feeds back one ACK corresponding to the data packet to the node A1. Alternatively, to reduce overheads, each time the destination node E sends a plurality of data packets (for example, three data packets) of one data segment, the destination node E may feed back one ACK corresponding to the plurality of data packets to the node A1.

607: When the node A1 determines that a quantity of received acknowledgement messages that are sent by the destination node E and that are for the data segment 1a reaches a preset quantity, the node A1 indicates the node B2 to send the data segment 1b to the destination node E.

For example, when sequentially sending a plurality of data segments of one data flow, the node A1 may maintain a counter corresponding to the data segment for each data segment, and the counter is configured to record a quantity of data packets of the sent data segment. For example, when sending the data segment 1a, the node A1 may maintain a counter 1 for the data segment 1a sent through the port r, and the counter 1 may record a quantity of data packets of the data segment 1a forwarded by the node B1. Because the node A1 is a node that generates the data segment 1a, the node A1 knows a quantity of data packets of the data segment 1a. For example, a count of the counter 1 is N, and N is an integer greater than or equal to 1. Each time the destination node E sends one data packet of the data segment 1a, the destination node E may feed back one ACK to the node A1, and the node A1 decreases the count of the counter 1 by 1. When the count of the counter 1 decreases to 0, the node A1 determines that the quantity of ACKs for the data segment 1a reaches the preset quantity, and the node A1 determines that the destination node E completely sends the data segment 1a.

Alternatively, the destination node E may feed back one ACK to the node A1 each time after sending two or more than two data packets of the data segment 1a, to reduce signaling overheads.

In some embodiments, when the destination node E feeds back, to the node A1, an ACK corresponding to a data packet of the data segment 1a, the ACK may be fed back to the port r of the node A1 based on a path the same as that of the corresponding data packet.

Optionally, when sequentially sending a plurality of data segments of one data flow, the node A1 may maintain a timer (or a timing counter) corresponding to the data segment for each data segment. The timer is configured to start timing when the node A1 starts to send one data segment. For example, when sending the data segment 1a, the node A1 may maintain a timer 1 for the data segment 1a sent through the port r, and the timer 1 is configured to start timing when the node A1 starts to send the data segment 1a. When time of the timer 1 reaches preset time, for example, 10 µs, the node A1 considers that the timer 1 expires, and determines that the data segment 1a is completely sent by the destination node E.

For example, when the node A1 determines that the destination node E completely sends the data segment 1a, the node A1 indicates the node B2 to send the data segment 1b to the destination node. For example, the node A1 sends a first message to the node B2, where the first message includes first indication information, and a bit value of a field C in the first indication information may be "0", indicating that the node B2 does not need to continue to cache the data segment 1b. This is equivalent to indicating the node B2 to send the data segment 1b to the destination node E.

The first message further includes the flow information of the data segment 1b, so that the node B2 identifies the to-be-sent data segment 1b.

In some embodiments, there is a time difference between a time point at which the node A1 completely sends the data segment 1a and a time point at which the node B2 starts to send the data segment 1b. To reduce the time difference, the node A1 may alternatively send the first message to the node B2 in advance according to a specific rule. For example, the data segment 1a includes 10 data packets, and the node A1 may send the first message to the node B2 when the node A1 receives an ACK for a 9^{th} data packet. In this case, a small quantity of out-of-order cases may occur on the destination node E, and a small amount of re-ordering logic may be set on the destination node E, to handle the low-probability out-of-order cases. However, in comparison with existing re-ordering overheads, overheads for handling low-probability re-ordering in this application are much lower.

608: When determining that the destination node E completely sends the data segment 1, the node A1 sends an acknowledgement message for the data segment 1 to the node D.

In some embodiments, when the destination node E completely sends all data packets of the data segment 1b, the destination node E may also return an ACK for the data packet of the data segment 1b to the port s of the node A1 along an original path based on a sending path of the data packet of the data segment 1b. When the node A1 determines, on the port s based on the foregoing implementation of the counter, that the destination node E completely sends the data segment 1b, the node A1 may determine that the destination node E completely sends the data segment 1. In this case, the node A1 may feed back the ACK about the data segment 1 to the node D, so that the node A1 determines that the destination node completely sends the data segment 1.

Alternatively, in some embodiments, each time the destination node E sends one data packet of the data segment 1a, the destination node E feeds back an ACK for each data packet of the data segment 1a to the node A1. When the destination node E completely sends all the data packets of the data segment 1a and all the data packets of the data segment 1b, the destination node E may further feed back, to the node D, the ACK about the data segment 1 to the port m of the node D. In this way, not only the node A1 knows that the destination node E completely sends the data segment 1a, but also the node D knows that the destination node E completely sends the data segment 1.

609: When determining that the destination node completely sends the data segment 1, the node D indicates the node A2 to send the data segment 2 to the destination node E.

This is equivalent to a case in which the node D controls the data segment 2 to be cached on the node A2, so that the destination node E receives the data segment 2 after sending the data segment 1. In this way, when the destination node receives data from the node D, an out-of-order case does not occur.

Therefore, from the perspective of a data flow, this application allows the nodes in the multipath network to separately execute the data transmission mechanism in this application, and finally a tree structure may be formed, to maximize multipath utilization of the network. Therefore, in the data transmission mechanism in this application, a cache of each node in the network can be fully used, to achieve an effect of sharing a cache in an entire network.

In the foregoing example, the node D sends the data segment 1 to the node A1, and sends the data segment 2 to the node A2. This is equivalent to an example in which the node D has two sending paths or two sending ports. In actual application, in large-scale multipath networking, the node D may have more than two sending ports for selection. Therefore, the node D may obtain more than two data segments, and sequentially control sending time points of the more than two data segments based on the data transmission mechanism in this application, so that when the destination node E receives a plurality of data segments from the node D, an out-of-order case does not occur.

Similarly, the node A1 and the node A2 may alternatively have more than two sending ports for selection. For example, the node A1 may alternatively obtain a plurality of data segments other than the two data segments, namely, the data segment 1a and the data segment 1b, and sequentially control sending time points of the more than two data segments based on the data transmission mechanism in this application, so that when the destination node E receives a plurality of data segments from the node A1, an out-of-order case does not occur.

In some embodiments, for the foregoing examples, the data segment 2 generated by the node D is cached on the node A2 and then continues to be sent, or after the node A2 sends the data segment 2 to the node B3, the node B3 continues to cache the data segment 2, and then sends the data segment 2 to the destination node E through the node C2. That is, the data segment 2 may be cached by a plurality of nodes and then sent to the destination node E. After the node D determines that the destination node E completely sends the data segment 1, the node D may send the first message to both the node A2 and the node B3, indicating the node A2 and the node B3 to send the data segment 2. Alternatively, the node D may send the first message to the node A2. When the node A2 determines that the data segment 2 is sent to the node B3 for further caching, the node A2 forwards the first message to the node B3, indicating the node B3 to send the data segment 2.

In some embodiments, some of data packets in the data segment 2 generated by the node D may be cached on the node A2, and the other data packets may be cached on the node B3. After the node D determines that the destination node completely sends the data segment 1, the node D may send the first message to both the node A2 and the node B3, indicating the node A2 to send some of the data packets cached on the node A2, and indicating the node B3 to send some of the data packets cached on the node B3. Alternatively, the node D may send the first message to the node A2, the node A2 sends some of the data packets cached on the node A2, and the node A2 forwards the first message to the node B3, indicating the node B3 to send some of the data packets cached on the node B3.

Similarly, the data segment 1b generated by the node A1 is cached on the node B2 and then continues to be sent, or may be sent to the destination node E after the node C1 continues to cache the data segment 1b. That is, the data segment 1b may alternatively be cached by a plurality of nodes and then sent to the destination node E. After the node A1 determines that the destination node E completely sends the data segment 1a, the node D may send the first message to both the node B2 and the node C1, indicating the node B2 and the node C1 to send the data segment 1b. Alternatively, the node A1 may send the first message to the node B2. When the node B2 determines that the data segment 1b has been sent to the node C1 for further caching, the node B2 forwards the first message to the node C1, indicating the node C1 to send the data segment 1b.

Alternatively, some of data packets in the data segment 2 generated by the node A1 are cached on the node A2, and the other data packets are cached on the node B3. After the node D determines that the destination node completely sends the data segment 1, the node D may send the first message to both the node A2 and the node B3, indicating the node A2 to send some of the data packets cached on the node A2, and indicating the node B3 to send some of the data packets cached on the node B3. Alternatively, the node D may send the first message to the node A2, the node A2 sends some of the data packets cached on the node A2, and the node A2 forwards the first message to the node B3, indicating the node B3 to send some of the data packets cached on the node B3.

In conclusion, when this embodiment of this application is applied to a multipath network structure, a load balancing mechanism with a data segment as a granularity may be deployed on a node, an intermediate node that forwards a data segment may cache the data segment, and a source node that generates the data segment may control a sending occasion of the intermediate node, so that a probability that the destination node for the data flow is out-of-order can be reduced, or the destination node does not perform data packet re-ordering. In this way, network load balancing is considered, overheads of performing re-ordering by the destination node are low, and data transmission efficiency is improved.

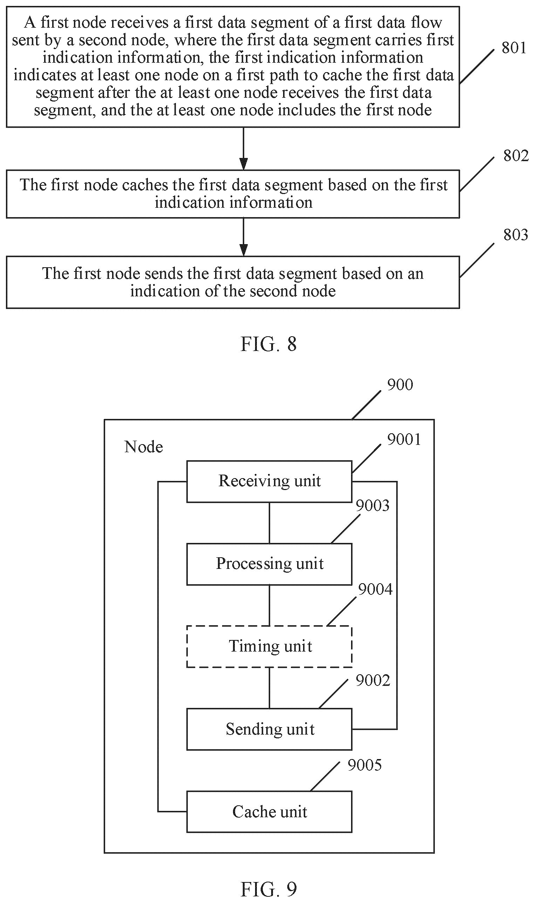

FIG. 8 is a schematic flowchart of a data transmission method according to an embodiment of this application. The data transmission method includes the following procedure.

801: A first node receives a first data segment of a first data flow sent by a second node, where the first data segment carries first indication information, and the first indication information indicates at least one node on a first path to cache the first data segment after the at least one node receives the first data segment.

The first node in steps 801 to 803 may be understood as a node that needs to cache a plurality of data segments in the foregoing embodiment. That is, the first node herein may be configured to cache one data segment of one data flow, or may be configured to cache a plurality of data segments of one data flow. Alternatively, the first node may be configured to cache data segments of a plurality of data flows.

For example, the first node herein may be, for example, A2 or B2 in the foregoing embodiment.

In correspondence to the foregoing embodiment, the first data segment received by the first node includes at least one data packet, and each of the at least one data packet includes the first indication information. For example, a bit value of a C field carried in the first indication information is "1".

In correspondence to the foregoing embodiment, each data packet of the first data segment further includes flow information corresponding to the first data segment.

The flow information corresponding to the first data segment may include a node identifier of the second node and a segment identifier allocated by the second node to the first data segment.

Alternatively, the flow information corresponding to the first data segment may include a port identifier used when the first node receives the first data segment and a segment identifier allocated by the second node to the first data segment.

In correspondence to the foregoing embodiment, the first indication information further indicates address information of the at least one node that caches the first data segment. The at least one node includes the first node herein. Alternatively, the first indication information does not need to indicate the address information of the at least one node, and some of specific nodes in a network, for example, a node at a layer, may be preconfigured with a data segment caching capability.

802: The first node caches the first data segment based on the first indication information.

803: The first node sends the first data segment based on an indication of the second node.

In correspondence to the foregoing embodiment, when receiving a first message sent by the second node, the first node sends the first data segment, where the first message indicates the first node to send the first data segment, the first message includes the flow information of the first data segment, and the flow information of the first data segment is for identifying the first data segment.

In correspondence to the foregoing embodiment, the method may further include: The first node receives at least one acknowledgement message sent by a destination node of the first data flow, where the acknowledgement message indicates that the destination node completely sends at least one data packet of the first data segment. The first node sends the at least one acknowledgement message to the second node.

For example, when the second node may be, for example, the node A1, the first data segment is the data segment 1b, and the first node is the node B2, the node B2 may further receive ACKs that are sent by the destination node E and that are for a plurality of data packets of the first data segment, and forward the ACKs for the plurality of data packets to the node A1, so that the node A1 determines whether the destination node completely sends the first data segment. In this way, if the node A1 further needs to continue to send a second data segment sent after the first data segment, the node A1 may indicate a node that caches the second data segment to send the second data segment. Alternatively, the node A1 may further send, to the upstream node D, an ACK indicating that the first data segment is completely sent by the destination node, so that the node D determines whether to indicate a node that caches a data segment generated by the node D to send the data segment generated by the node D.

Therefore, when this embodiment of this application is applied to a multipath network structure, an intermediate node that forwards a data segment may cache the data segment, and a source node that generates the data segment may control a sending occasion of the intermediate node, so that a probability that the destination node for the data flow is out-of-order can be reduced, or the destination node does not perform data packet re-ordering. In this way, network load balancing is considered, overheads of performing re-ordering by the destination node are low, and data transmission efficiency is improved.

It may be understood that, to implement the foregoing functions, the node includes a corresponding hardware and/or software module that performs each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that division into the modules in embodiments is an example, and is merely logical function division. In actual implementation, there may be another division manner.

When each functional module corresponding to each function is obtained through division, FIG. 9 is a possible schematic composition diagram of a node 900 in the foregoing embodiments. The node 900 may be, for example, the first node in the foregoing embodiments. As shown in FIG. 9, the node 900 may include a receiving unit 9001, a sending unit 9002, a processing unit 9003, a timing unit 9004, and a cache unit 9005.

The receiving unit 9001 may be configured to support the node 900 in performing step 501, step 601, the receiving process in step 606, step 801, and/or another process of the technology described in this specification.

The sending unit 9002 may be configured to support the node 900 in performing step 502, step 602, step 603, the sending process in step 604, the sending process in step 606, step 607, step 608, step 803, and/or another process of the technology described in this specification.

The processing unit 9003 may be configured to support the node 900 in performing the recording process in step 604, step 609, and/or another process of the technology described in this specification.

The timing unit 9004 may be configured to support the node 900 in performing the timing process of the timer in the foregoing steps, and/or another process of the technology described in this specification.

The cache unit 9005 may be configured to support the node 900 in performing step 605, step 802, and/or another process of the technology described in this specification.

It should be noted that all related content of the steps in the foregoing method embodiments may be cited in the functional description of the corresponding functional modules. Details are not described herein again.

The node 900 provided in this embodiment is configured to perform the foregoing data transmission method, and therefore can achieve same effect as the foregoing implementation method.

When an integrated unit is used, the node 900 may include a processing module, a storage module, and a communication module. The processing module may be configured to control and manage an action of the node 900, for example, may be configured to support the node 900 in performing steps performed by the processing unit 9003, the timing unit 9004, and the cache unit 9005. The storage module may be configured to support the electronic device 1100 in storing program code, data, and the like. The communication module may be configured to support the node 900 in communicating with another device, for example, communicating with a wireless access device. For example, the communication module may support the node 900 in performing steps performed by the receiving unit 9001 and the sending unit 9002.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

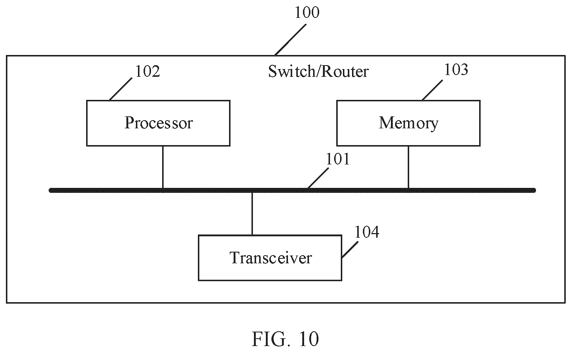

In an embodiment, when the processing module is a processor 102, the storage module is a memory 103, and the communication module is a transceiver 104, the node 900 in this embodiment may be a switch/router 100 that has a structure shown in FIG. 10 and that is coupled by using a bus 101.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the data transmission method in the foregoing embodiments.

An embodiment of this application further provides a computer storage medium. The computer storage medium stores computer instructions. When the computer instructions are run on an electronic device, the electronic device is enabled to perform the related method steps, to implement the data transmission method in the foregoing embodiments.

An embodiment of this application further provides a computer program product. When the computer program product runs on a computer, the computer is enabled to perform the foregoing related steps, to implement the data transmission method performed by the electronic device in the foregoing embodiments.

In addition, embodiments of this application further provide an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the data transmission method performed by the node in the foregoing method embodiments.

The electronic device, the computer storage medium, the computer program product, or the chip provided in this embodiment is configured to perform the corresponding method provided above. Therefore, for beneficial effects that can be achieved by the electronic device, the computer storage medium, the computer program product, or the chip, refer to the beneficial effects in the corresponding method provided above. Details are not described herein.

Another embodiment of this application provides a system. The system may include a plurality of nodes in the foregoing multipath network, and may be configured to implement the foregoing data transmission method.

It may be understood that, to implement the foregoing functions, the node includes a corresponding hardware and/or software module that performs each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to a conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A data transmission method, wherein the method comprises:
receiving a first data flow;
splitting the first data flow into a plurality of data segments, and sending the plurality of data segments along at least two paths, wherein a first data segment in the plurality of data segments is sent along a first path, the first data segment carries first indication information, and the first indication information indicates at least one node on the first path to cache the first data segment after the at least one node receives the first data segment; and
indicating the at least one node that is on the first path and that is caching the first data segment to send the first data segment.

2. The method according to claim 1, wherein each of the plurality of data segments comprises at least one data packet, and each of the at least one data packet carries the first indication information.

3. The method according to claim 2, wherein the method is applied to a first node; and
each data packet of each data segment further comprises flow information corresponding to each data segment, wherein
the flow information corresponding to each data segment comprises a node identifier of the first node and a segment identifier allocated by the first node to each data segment; or
the flow information corresponding to each data segment comprises a port identifier used when a node that caches each data segment receives each data segment and a segment identifier allocated by the first node to each data segment.

4. The method according to any one of claims 1 to 3, wherein the first indication information further indicates address information of the at least one node that caches the first data segment.

5. The method according to any one of claims 1 to 4, wherein the method further comprises:
when the plurality of data segments are sent, recording sending paths of the plurality of data segments.

6. The method according to claim 5, wherein the recording sending paths of the plurality of data segments comprises:
recording an identifier of a corresponding port for sending each of the plurality of data segments.

7. The method according to claim 6, wherein when the plurality of data segments comprise the first data segment and a second data segment, the sending the plurality of data segments along at least two paths comprises:
sending the second data segment through a first port; and
sending the first data segment through a second port, wherein the second port is different from the first port, and the first data segment is a data segment following the second data segment.

8. The method according to claim 7, wherein the first indication information carried in the second data segment indicates not to cache the second data segment.

9. The method according to claim 7 or 8, wherein the indicating the at least one node that is on the first path and that is caching the first data segment to send the first data segment comprises:
receiving at least one acknowledgement message sent by a destination node of the first data flow, wherein the acknowledgement message indicates that the destination node completely sends at least one data packet of the second data segment; and
when a quantity of acknowledgement messages reaches a preset quantity, indicating the at least one node that is on the first path and that is caching the first data segment to send the first data segment to the destination node.

10. The method according to claim 7 or 8, wherein the indicating the at least one node that is on the first path and that is caching the first data segment to send the first data segment comprises:
when the second data segment starts to be sent, starting a timer; and
when time of the timer reaches preset time, indicating the at least one node that is on the first path and that is caching the first data segment to send the first data segment to a destination node that receives the first data flow.

11. The method according to claim 9 or 10, wherein the indicating the at least one node that is on the first path and that is caching the first data segment to send the first data segment to the destination node comprises:
sending a first message to a node that caches the first data segment, wherein the first message comprises flow information of the first data segment, the first message indicates the at least one node that caches the first data segment to send the first data segment to the destination node, and the flow information of the first data segment is for identifying the first data segment.

12. The method according to claim 1, wherein
the receiving a first data flow comprises: receiving the first data flow from a second node, to obtain the plurality of data segments of the first data flow; and
the method further comprises:
when it is determined that a destination node that receives the first data flow completely sends the plurality of data segments, sending, by a first node, a first acknowledgement message to the second node, wherein the first acknowledgement message indicates that the destination node completely sends the plurality of data segments.

13. The method according to claim 12, wherein the receiving the first data flow from a second node, to obtain the plurality of data segments of the first data flow comprises:
receiving and sending a plurality of data packets of the first data flow; and
when it is determined that sending states of the plurality of data packets of the first data flow satisfy at least one parameter in preset configuration parameters, obtaining the plurality of data segments based on the at least one parameter in the preset configuration parameters, wherein
the preset configuration parameters comprise a sent data size of any data flow on one port of the first node, time in which the first node sends the data flow, and a time gap between sending data packets of the data flow by the first node.

14. A data transmission method, wherein the method comprises:
receiving a first data segment of a first data flow sent by a second node, wherein the first data segment carries first indication information, and the first indication information indicates at least one node on a first path to cache the first data segment after the at least one node receives the first data segment;
caching the first data segment based on the first indication information; and
sending the first data segment based on an indication of the second node.

15. The method according to claim 14, wherein the first data segment comprises at least one data packet, and each of the at least one data packet comprises the first indication information.

16. The method according to claim 15, wherein the method is applied to a first node; and
each data packet of the first data segment further comprises flow information corresponding to the first data segment, wherein
the flow information corresponding to the first data segment comprises a node identifier of the second node and a segment identifier allocated by the second node to the first data segment; or
the flow information corresponding to the first data segment comprises a port identifier used when the first node receives the first data segment and a segment identifier allocated by the second node to the first data segment.

17. The method according to any one of claims 14 to 16, wherein the first indication information further indicates address information of the at least one node that caches the first data segment.

18. The method according to any one of claims 14 to 17, wherein the sending the first data segment based on an indication of the second node comprises:
when a first message sent by the second node is received, sending the first data segment, wherein the first message indicates the first node to send the first data segment, the first message comprises the flow information of the first data segment, and the flow information of the first data segment is for identifying the first data segment.

19. The method according to claim 18, wherein the method further comprises:
receiving at least one acknowledgement message sent by a destination node of the first data flow, wherein the acknowledgement message indicates that the destination node completely sends at least one data packet of the first data segment; and
sending the at least one acknowledgement message to the second node.

20. A data transmission node, wherein the data transmission node comprises:
a receiving unit, configured to receive a first data flow;
a processing unit, configured to split the first data flow into a plurality of data segments; and
a sending unit, configured to send the plurality of data segments along at least two paths, wherein a first data segment in the plurality of data segments is sent along a first path, the first data segment carries first indication information, and the first indication information indicates at least one node on the first path to cache the first data segment after the at least one node receives the first data segment, wherein
the sending unit is further configured to indicate the at least one node that is on the first path and that is caching the first data segment to send the first data segment.

21. The data transmission node according to claim 20, wherein each of the plurality of data segments comprises at least one data packet, and each of the at least one data packet carries the first indication information.

22. The data transmission node according to claim 21, wherein the data transmission node is a first node; and
each data packet of each data segment further comprises flow information corresponding to each data segment, wherein
the flow information corresponding to each data segment comprises a node identifier of the first node and a segment identifier allocated by the first node to each data segment; or
the flow information corresponding to each data segment comprises a port identifier used when a node that caches each data segment receives each data segment and a segment identifier allocated by the first node to each data segment.

23. The data transmission node according to any one of claims 20 to 22, wherein the first indication information further indicates address information of the at least one node that caches the first data segment.

24. The data transmission node according to any one of claims 20 to 23, further comprising the processing unit, wherein the processing unit is configured to: when the plurality of data segments are sent, record sending paths of the plurality of data segments.

25. The data transmission node according to claim 24, wherein the processing unit is configured to:
record an identifier of a corresponding port for sending each of the plurality of data segments.

26. The data transmission node according to claim 25, wherein when the plurality of data segments comprise the first data segment and a second data segment, the sending unit is configured to:
send the second data segment through a first port; and
send the first data segment through a second port, wherein the second port is different from the first port, and the first data segment is a data segment following the second data segment.

27. The data transmission node according to claim 26, wherein the first indication information carried in the second data segment indicates not to cache the second data segment.

28. The data transmission node according to claim 26 or 27, wherein the receiving unit is configured to receive at least one acknowledgement message sent by a destination node of the first data flow, wherein the acknowledgement message indicates that the destination node completely sends at least one data packet of the second data segment; and
the sending unit is configured to: when a quantity of acknowledgement messages reaches a preset quantity, indicate the at least one node that is on the first path and that is caching the first data segment to send the first data segment to the destination node.

29. The data transmission node according to claim 26 or 27, further comprising a timing unit, configured to: when the second data segment starts to be sent, start a timer, wherein
the sending unit is configured to: when time of the timer reaches preset time, indicate the node that is on the first path and that is caching the first data segment to send the first data segment to a destination node that receives the first data flow.

30. The data transmission node according to claim 26 or 27, wherein the sending unit is configured to:
send a first message to a node that caches the first data segment, wherein the first message comprises flow information of the first data segment, the first message indicates the at least one node that caches the first data segment to send the first data segment to the destination node, and the flow information of the first data segment is for identifying the first data segment.

31. The data transmission node according to claim 20, wherein
the receiving unit is configured to receive the first data flow from a second node, to obtain the plurality of data segments of the first data flow; and
the sending unit is further configured to: when it is determined that a destination node that receives the first data flow completely sends the plurality of data segments, send, for the first node, a first acknowledgement message to the second node, wherein the first acknowledgement message indicates that the destination node completely sends the plurality of data segments.

32. The data transmission node according to claim 31, wherein the receiving unit is configured to receive a plurality of data packets of the first data flow, and the sending unit is configured to send the plurality of data packets of the first data flow; and
the data transmission node further comprises the processing unit, configured to: when it is determined that sending states of the plurality of data packets of the first data flow satisfy at least one parameter in preset configuration parameters, obtain the plurality of data segments based on the at least one parameter in the preset configuration parameters, wherein
the preset configuration parameters comprise a sent data size of any data flow on one port of the first node, time in which the first node sends the data flow, and a time gap between sending data packets of the data flow by the first node.

33. A data transmission node, wherein the data transmission node comprises:
a receiving unit, configured to receive a first data segment of a first data flow sent by a second node, wherein the first data segment carries first indication information, and the first indication information indicates at least one node on a first path to cache the first data segment after the at least one node receives the first data segment;
a processing unit, configured to cache the first data segment based on the first indication information; and
a sending unit, configured to send the first data segment based on an indication of the second node.

34. The data transmission node according to claim 33, wherein the first data segment comprises at least one data packet, and each of the at least one data packet comprises the first indication information.

35. The data transmission node according to claim 34, wherein the data transmission node is a first node; and
each data packet of the first data segment further comprises flow information corresponding to the first data segment, wherein
the flow information corresponding to the first data segment comprises a node identifier of the second node and a segment identifier allocated by the second node to the first data segment; or
the flow information corresponding to the first data segment comprises a port identifier used when the first node receives the first data segment and a segment identifier allocated by the second node to the first data segment.

36. The data transmission node according to any one of claims 33 to 35, wherein the first indication information further indicates address information of at least one node that caches the first data segment.

37. The data transmission node according to any one of claims 33 to 36, wherein the sending unit is configured to:
when a first message sent by the second node is received, send the first data segment, wherein the first message indicates the first node to send the first data segment, the first message comprises the flow information of the first data segment, and the flow information of the first data segment is for identifying the first data segment.

38. The data transmission node according to claim 37, wherein the receiving unit is further configured to:
receive at least one acknowledgement message sent by a destination node of the first data flow, wherein the acknowledgement message indicates that the destination node completely sends at least one data packet of the first data segment; and
send the at least one acknowledgement message to the second node.

39. A computer-readable storage medium, comprising computer instructions, wherein when the computer instructions are run on an electronic device, the electronic device is enabled to perform the method according to any one of claims 1 to 13.

40. A computer-readable storage medium, comprising computer instructions, wherein when the computer instructions are run on an electronic device, the electronic device is enabled to perform the method according to any one of claims 14 to 19.
